# EUROPEAN PATENT SPECIFICATION

(11) **EP 1 418 139 B1**
(45) Date of publication and mention of the grant of the patent: **04.06.2008**
(21) Application number: 03256927.9
(22) Date of filing: 31.10.2003
(51) Int. Cl.: B65G 15/00, B65G 23/12

(54) **Belt conveyor**
Bandförderer
Transporteur à courroie

(30) Priority: 05.11.2002 JP 2002321144
(43) Date of publication of application: 12.05.2004
(73) Proprietor: Maruyasu Kikai Co. Ltd., Okaya-shi, Nagano-ken (JP)
(72) Inventor: Osaka, Hajime, Okaya-shi Nagano-ken (JP)
(74) Representative: Wood, Graham

(56) References cited:
- FR-A- 2 771 080
- PATENT ABSTRACTS OF JAPAN vol. 2000, no. 20, 10 July 2001 (2001-07-10) & JP 2001 058712 A (MARUYASU KIKAI KK), 6 March 2001 (2001-03-06)
- PATENT ABSTRACTS OF JAPAN vol. 2002, no. 05, 3 May 2002 (2002-05-03) & JP 2002 012312 A (MARUYASU KIKAI KK), 15 January 2002 (2002-01-15)

## Description

This invention relates to a belt conveyor and more particularly a so-called center drive type belt conveyor in which a driving mechanism for rotationally driving a belt is installed at a returning path of the belt conveyor.

As the prior art belt conveyor, there is provided a belt conveyor in which a driving mechanism for driving and rotating a belt is installed at a substantial central part in a returning path of a conveyor main body.

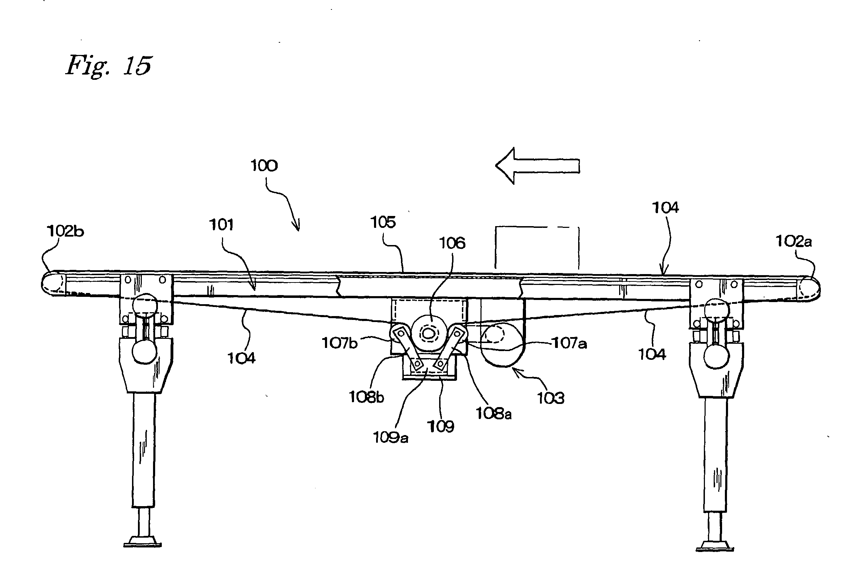

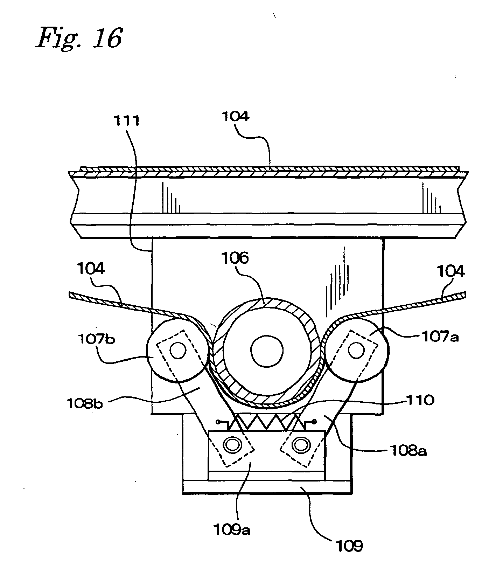

For example, a belt conveyor 100 shown in Figs. 15 and 16 is called as a center drive type belt conveyor, wherein both ends of the conveyor main body 101 are provided with each of the rollers 102a, 102b and at the same time an endless belt 104 is installed between these both rollers 102a, 102b to constitute a transferring path 105 for use in transporting a transported item on the upper surface of the conveyor main body 101 Japanese Patent Application No. Hei 11-14486).

A driving mechanism 103 for use in driving the belt 104 as described above is constructed such that it is installed below the conveyor main body 101, i.e. a returning path, a returning path side of the belt 104 is wound around below the driving roller 106 and contacted with it, and further a pair of snap rollers 107a, 107b are pressed against one side and the other side of the driving roller 106, thereby the aforesaid belt 104 is driven through rotation of the driving roller 106.

Both snap rollers 107a, 107b described above are rotatably pivoted at the extremity ends of a pair of supporting arms 108a, 108b arranged at one side and the other side of an outer circumference of the driving roller 106. In addition, both supporting arms 108a, 108b described above are pivoted at their lower ends to a raised segment 109a of a supporting member 109 removably attached to and supported against the member at the conveyor main body 109a. Then, a spring 110 is resiliently installed between both supporting arms 108a, 108b and then a recovering force of the spring 110 produces a biasing force acted in a direction where both supporting arms 108a, 108b approach to each other. Then, both snap rollers 107a, 107b pivoted at the extremity ends of both supporting arms 108a, 108b are abutted against one side and the other side of an outer circumference of the driving roller 106 with this biasing force, and the belt 104 is contacted with an outer circumferential surface of the driving roller 106 by an appropriate pressure.

In regard to this fact, the belt conveyor 100 shown in Figs. 15 and 16 is a belt conveyor provided by the present applicant, wherein this is a center-drive type belt conveyor having a function capable of easily performing both fixing and removal of the belt when a maintenance work for the belt conveyor is carried out (Japanese Patent Application No. Hei 11-14486).

That is, the conveyor 100 constructed as described above has an advantage that the belt 104 can be easily pulled out toward a front side of the conveyor 100 by loosening a tensioned state of the belt 104 kept by both snap rollers 107a, 107b as described above through removal of the supporting member 109 having both supporting arms 108a, 108b fixed and supported there from a side plate 111 of the conveyor main body and further removal toward a downward direction.

However, the aforesaid conveyor 100, members required at pivot portions of the base ends of both supporting arms 100a, 100b and their machining and the like required a relative high cost and so there has been present a request for improving this disadvantage. This belt conveyor 100 conforms to the preamble of claim 1.

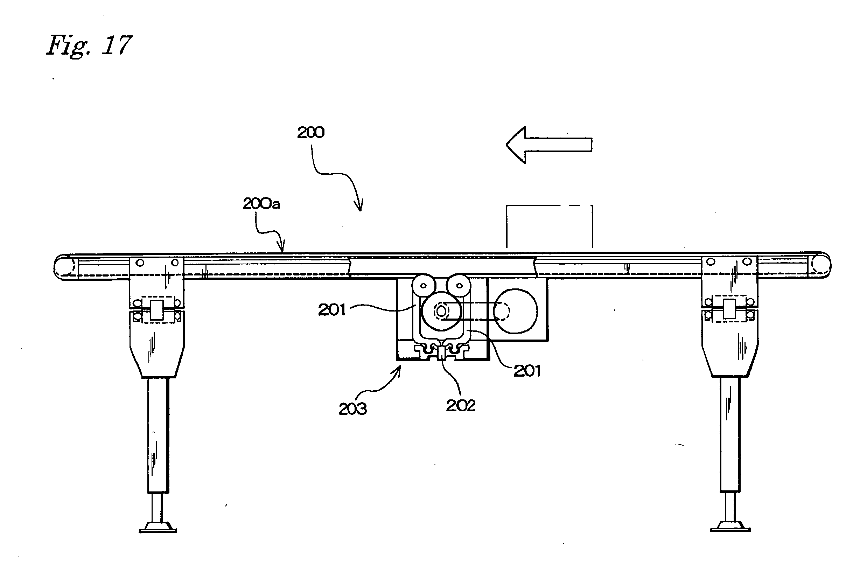

In addition, the belt conveyor disclosed in Japanese Patent Disclosure No. 2001-58712 has been developed in reference to such a circumstance as above (Fig. 17). This belt conveyor 200 has a rational device for solving the aforesaid problem and a driving unit 203 is installed at a returning path side of the conveyor main body 200a. Its structure is simplified to reduce its cost by rotationally fitting and installing the pivot portions of the base ends of a pair of turning arms 201 to the driving unit 203.

It is necessary to turn a cam 202 for use in turning an arm with a rod-like tool or a screwdriver so as to turn both supporting arms 201 in this conveyor 200. However, in the case that these tools were not present around the conveyor, it was necessary to bring either a screwdriver or a rod-like tool.

In turn, an introduction of Hazard Analysis Critical Control Point (HACCP) provided in the U.S.A has been accelerated in the food processing industry in regard to a crisis of germ such as O-157 and the like. Along with this trend, a sanitary control in compliance with HACCP described above has been required strongly also in the case of a belt conveyor used in a food processing and manufacturing facility. More practically, it is preferable to make a neat washing and sterilization of the belt conveyor through a regular removal of either a machine body or a belt itself in view of restriction of propagation of germ so as to keep a sanitary state of the belt conveyor

However, the prior art belt conveyor needs a troublesome work for removing the belt. In addition, it was difficult to perform an effective washing or cleaning and it took much amount of troublesome work for performing a washing operation because there were present many types of belt conveyors in which a machine body, for example, a frame and the like for use in supporting from below a going path-side belt becoming a transferring path is welded to a supporting column and the like and fixed there.

The object of the invention is to overcome these drawbacks of the prior art. This object is achieved by the belt conveyor of claim 1. This invention relates to a belt conveyor for assuring a contact force between an outer circumferential surface of the driving roller and the belt by abutting the snap rollers against the belt wound around the outer circumferential surface of the driving roller as described above. This invention simplifies a structure such as a supporting member for the snap rollers to reduce its manufacturing cost and has a function for applying a tension to or releasing a tension from the belt through snap rollers without using any exclusive tools or screwdriver and the like. Additionally, this invention simplifies a tension applying structure around the driving roller, reduces its cost through a simplified machining operation and has a function capable of performing an efficient sanitary management (mainly a washing work) in compliance with HACCP.

In addition, when the tension of the belt is released, the turning arms cooperated with both snap rollers are rotated in an opposite direction to cause both snap rollers to be retracted from the outer circumference of the driving roller. With such an arrangement as above, the belt is loosened and it can be removed from between both rollers.

Advantageously there is provided a clearance where the belt wound around the driving roller is pulled out in an outward direction when the belt is loosened around a member for bearing one end of the major shaft of the driving roller. In addition, this clearance causes one member for supporting the driving roller to be spaced apart from the other member for supporting the aforesaid turning arm.

The other member for supporting the supporting shaft is fixed to and supported at the extremity end of a cantilever supported at a conveyor main body frame side in a cantilever manner. That is, the other member described above becomes to be supported in a cantilever manner by the cantilever.

An intermediate part of the turning arm is provided with a first engagement part made integral with the turning arm and turned with it. In addition, a second engagement part and the first engagement part described above arranged at the member of the conveyor main body are engaged with each other when the turning arm is turned substantially up to the engagement end part, the extremity end of the cantilever is supported through this engagement relation and the cantilever described above can be supported at both ends. Thus, a load received at the cantilever during operation is dispersed due to a supporting form of both ends supporting state to enable a flexing deformation of the cantilever to be prevented.

A detailed description of embodiments of the invention is now described wherein;
Fig. 1 is a side elevational view for showing a belt conveyor of the present invention.
Fig. 2 is an enlarged view for showing a driving unit of the belt conveyor.
Fig. 3 is a sectional view taken along line III-III in Fig. 2.
Fig. 4 is an exploded perspective view for showing component parts around turning arms of the belt conveyor.
Fig. 5 is a sectional view taken along line V-V in Fig. 2.
Fig. 6 is a partial enlarged view for showing a shaft bearing part for a snap roller with a part being broken away.
Fig. 7 is an enlarged view for showing a part around a driving shaft and a partial enlarged view for showing a state in which the turning arms are turned upwardly.
Fig. 8 is an enlarged view for showing a part around a driving shaft and a partial enlarged view for showing a state in which the turning arms are turned downwardly.
Fig. 9 is a longitudinal section for showing a belt conveyor constructed such that a frame constituting a transferring passage is removably constituted.
Fig. 10 is a front elevational view for showing a state in which one turning arm is loosened.
Fig. 11 is a front elevational view for showing a snap roller and a turning arm part of the belt conveyor with a part being cut away.
Fig. 12 shows a belt conveyor in which a supporting structure for a turning arm base end is simplified.
Fig. 13 is a perspective view for showing a supporting member formed in a substantial V-shape as seen in a top plan view and an accessory member.
Fig. 14(a) is a front elevational view in longitudinal section for showing an engagement piece inserted into a holding notch, and (b) is a side elevational view with the same being partially cut away.
Fig. 15 is a side elevational view for showing the prior art belt conveyor with a part being broken away.
Fig. 16 is a longitudinal sectional view for showing a driving roller for the belt conveyor with a part being broken away.
Fig. 17 is a side elevational view for showing a belt conveyor having a supporting structure for a turning arm base end simplified with a part being cut away.

Referring now to the drawings, more practical embodiments of the present invention will be described in detail. However, the present invention is not limited to the embodiments illustrated in the drawings, but its partial constitution may have various variations. The same component elements in the entire drawings are denoted by the same symbols and their duplex explanation will be eliminated.

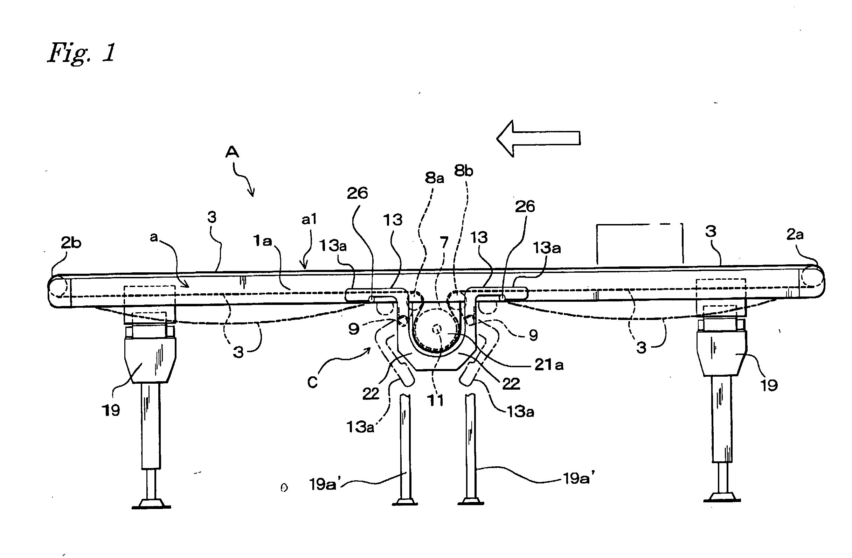

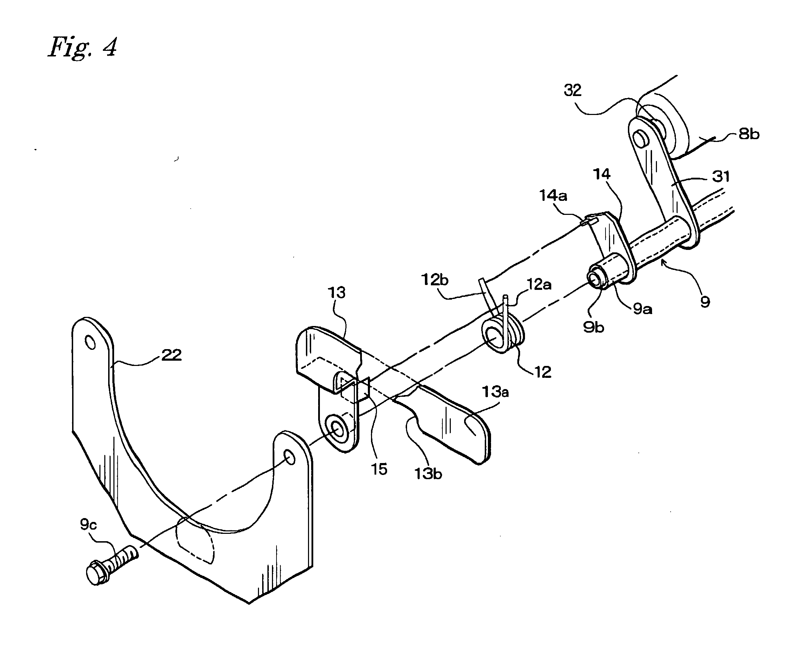

The conveyor illustrated in Figs. 1 to 8 is a so-called center-drive type belt conveyor provided with a driving part at a substantial central part.

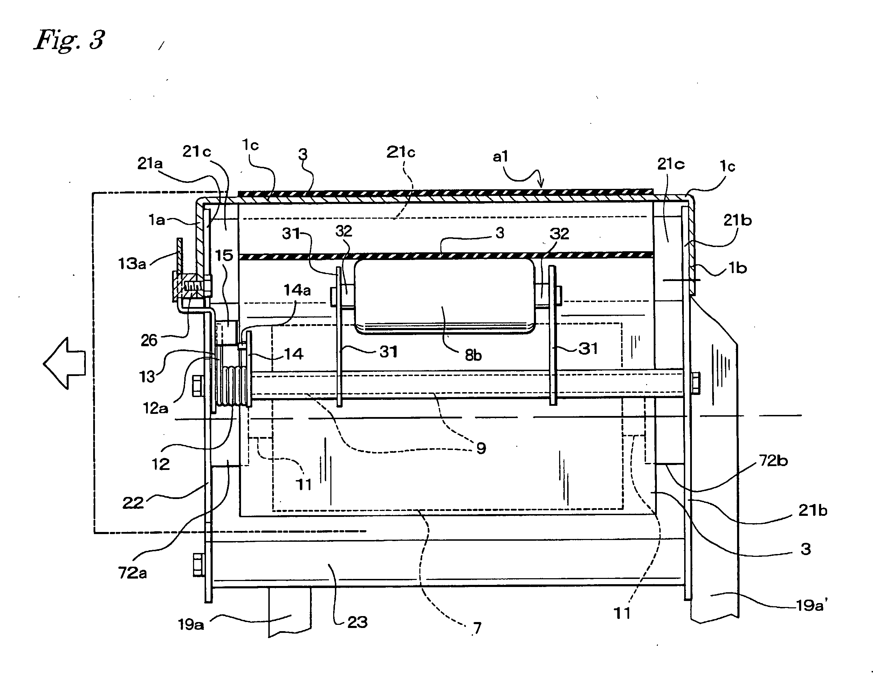

The conveyor main body (a) of a belt conveyor A has frames 1a, 1b arranged in parallel along both right and left sides, and the frames 1a, 1b are connected by a flat plate-like connector plate 1c. The conveyor main body (a) constitutes a planer transferring path a1 by entirely supporting a going-path side of the endless belt 3. In the case of the preferred embodiment, both frames 1a, 1b and both right and left sides of the flat plate-like connector plate 1c connecting between these frames are bent at a right angle in a sectional view and integrally formed (Fig. 3).

Returning-back rollers 2a, 2b are arranged at both ends of both right and left frames 1a, 1b connected in parallel to each other as described above, and an endless belt 3 constituting the transferring path a1 is wound around between the rollers 2a, 2b.

Legs 19 are fixed at the starting end and the terminal end of the frame 1a at one side of the conveyor main body (a), and the conveyor main body (a) is self stood in a horizontal state through these legs 19. Further, as described above, the legs for supporting the frame may be of a cantilever type and in this case, a pulling-out of the belt can be carried out more easily (not shown).

Central legs 19a, 19a' are installed at the central part of the frame 1a to support the central part of the conveyor main body (a) to which a load is relatively applied. The central leg 19a at the frame 1a is arranged to support from below the cantilever 23 arranged in a horizontal state (Fig. 3).

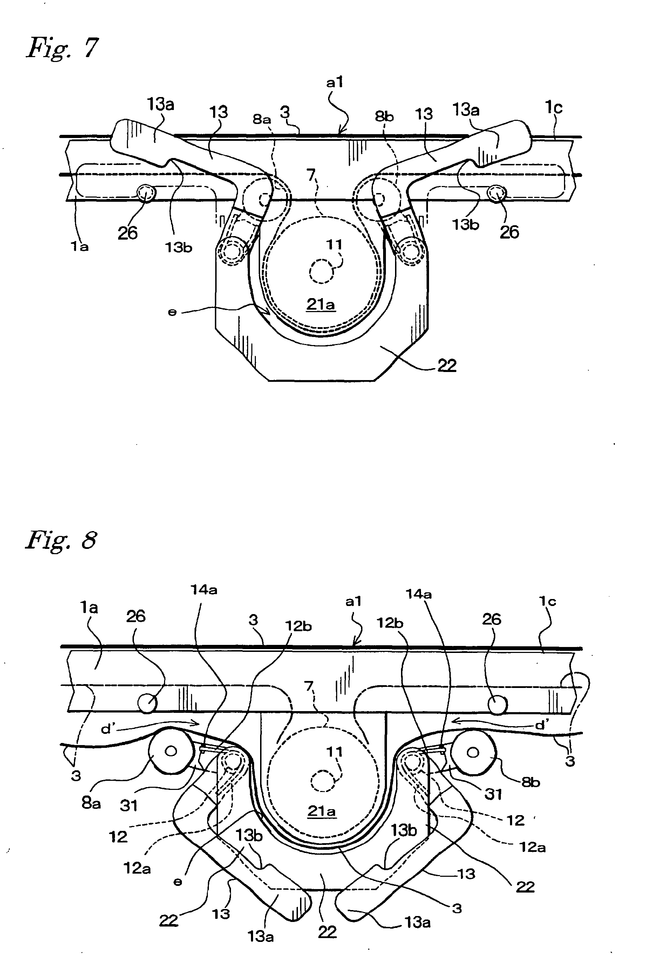

A returning path side of the belt 3 wound around between the rollers 2a, 2b at both ends of the conveyor main body (a) is supported entirely from below by the connector plate 1c so as to constitute a horizontal plane becoming the transferring path a1 (Figs. 1 and 8). Additionally, the returning path side of the belt 3 is drawn inside a driving unit installed while being protruded below both frames 1a, 1b, and the returning path side is constituted such that the belt 3 wound around the outer circumference at a lower surface side of the driving roller 7 is held at both sides by the driving roller 7 installed at the driving unit C and by a pair of snap rollers 8a, 8b so as to transmit a driving rotation of the driving roller 7 to the belt 3 (Figs. 8 and 7).

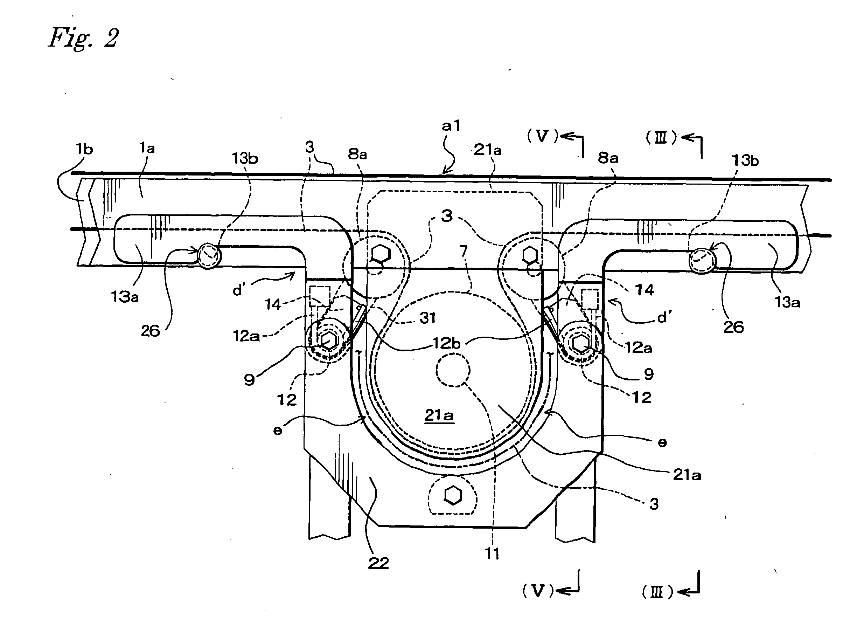

Upper segment of each of the supporting plates 21a, 21b is fitted and fixed to a substantial central part of the frames 1a, 1b mounted along both right and left sides of the conveyor main body (a), and it is fixed to and supported at the frames 1a, 1b described above in a form in which its lower side is extended toward a downward direction. One side supporting plate 21a has a lower part formed in an arcuate shape (Fig. 2) and the other side supporting plate 21b is formed into a shape having a corner part cut. The supporting plates 21a, 21b keep a fixing strength of the supporting plate 21a while being connected a stay 21c composed of a rectangular pipe.

In addition, a cantilever 23 is installed laterally between an outer frame 22 and a lower part of the supporting plate 21b so as to keep a fixing strength of both members. Further, an upper end of the aforesaid central leg 19a is fitted and fixed to a location near one side of the cantilever 23 and one side of the conveyor main body (a) is supported by the central leg 19a. In turn, two central legs 19a' arranged at the other side of the frame main body (a) are fitted and fixed while being placed along the outer surface of the supporting plate 21b so as to support the central part of the frame main body (a) together with the central leg 19a.

A major shaft 11 for the driving roller 7 is arranged in a horizontal orientation between the supporting plate 21a and the supporting plate 21b, their both ends are supported at bearings 72a, 72b fixed to the inner surfaces of the supporting plates 21a, 21b. In addition, the driving roller 7 is a motor pulley having a motor mechanism installed therein and this is self-rotated through supplying of electrical power.

Further, in the case of the belt conveyor of the preferred embodiment, although the motor pulley driven and rotated by itself as the driving roller has been used, the conveyor of the present invention may use a driving mechanism for connecting a driving force of the driving motor to the driving roller through a power transmission means such as a timing belt or a chain and the like.

An outer frame 22 is arranged around the supporting plate 21a installed at the frame 1a. The outer frame 22 is a plate member having a substantial U-shape extending along an outside part of the supporting plate 21a and this is fixed to and supported at an outside part of the supporting plate 21a. In addition, the upper part of the outer frame 22 is positioned at a lower location than a lower edge of the frame 1a to enable the belt 3 to be inserted into or removed from a clearance d'.

The outer frame 22 is fixed to and supported at one end of the cantilever 23 connecting between it and the supporting plate 21b of the frame 1b so as to form a substantial U-shaped clearance (e) for inserting into or removing a wound portion of the belt 3 between an outer edge of the supporting plate 21a and an inner edge of the outer frame 22. That is, it is constructed such that the loosened belt 3 can be drawn out toward a side part through the clearance (e) and the aforesaid clearance d'. Further, in the case that the removed belt 3 is installed again, the belt is inserted at the aforesaid clearance d' and the clearance (e) in a horizontal orientation and wound around an outer circumference of the lower surface side of the driving roller 7.

Two supporting shafts 9 are installed between the aforesaid outer frame 22 and the supporting plate 21b. The two supporting shafts 9 are comprised of a hollow outer shaft 9a and an inner shaft 9b inserted into and fitted inside the outer shaft 9a and are installed along both sides of the driving roller 7 in a parallel orientation. Further, each of a torsion spring 12 and a base end of a turning arm 13 to be described later is installed at one end of the supporting shaft 9. That is, the cantilever 23 and both supporting shafts 9 support the aforesaid outer frame 22.

As described above, torsion springs 12 are fitted to the end portions of the two supporting shafts 9 at the frame 1a and at the same time a plate-like turning arm 13 having its outer shape formed in a substantial L-shape is installed there. Additionally, the outer shaft 9a having a stopper piece 14 described later to be fitted and fixed thereto is rotated around the supporting member of the inner shaft 9b. Further, the turning arm 13 is bent at its intermediate part to become a substantial crank shape in its sectional shape.

The aforesaid torsion springs 12 are fitted to the outer circumferences of the supporting shafts 9 at the frame 1a. In addition, the inner shaft 9b of the supporting shaft 9 is arranged at a base end of the turning arm 13 so as to be pivoted around a fulcrum point of the end part and fitted to and fixed to the end part of the inner shaft 9b through a bolt 9c. That is, the turning arm 13 is rotated with the inner shaft 9b being applied as a supporting shaft.

The torsion spring 12 is fitted between the base end location of the turning arm 13 and the stopper piece 14 fitted and fixed to the supporting shaft 9. One end of the torsion spring 12 is abutted against an abutment part 15 of the turning arm 13 and the other end is abutted against a stopper part 14a of the aforesaid stopper piece 14.

The torsion springs 12 fitted to one end of both supporting shafts 9 have stopper portions 12a, 12b linearly protruded at both ends. Then, these stopper portions 12a, 12b are rotated by a predetermined angle to cause the coil-like torsion springs 12 to be twisted and to produce a resilient twisting reaction force. As described above, the torsion springs 12 are fitted between the base end of the turning arm 13 at one end of the supporting shaft 9 and the stopper piece 14 fitted and fixed near the end surface of the driving roller 7 in the supporting shaft 9. With such an arrangement as above, the torsion springs 12 are operated such that the stopper portion 12a is turned as the turning arm 13 is turned, the torsion springs 12 are twisted in a turning direction of both turning arms 13 to cause a twisting reaction force to be generated at the torsion springs 12.

A stainless steel plate or the like forms the aforesaid turning arm 13, for example, into an outer shape having a substantial L-shape. In addition, the base end of the turning arm 13 is rotatably fitted to one end of the supporting shaft 9 and when a handle 13a formed at the extremity end is held with a hand and turned, the stopper portion 12a of the torsion spring 12 is turned by the abutment part 15 arranged at the base end of the turning arm 13 and it is twisted only by a predetermined angle.

The turning arm 13 is kept at a state in which the handle 13a is suspended down with the supporting shaft 9 being applied as a fulcrum point as indicated by an imaginary line in Fig. 8 under a state in which the belt 3 is loosened. In addition, the handle 13a is held with a hand from this state and the turning arm 13 is turned upwardly and pulled up. As the handle 13a is pulled up, the torsion spring 12 restricted in its turning with the stopper portion 14a of the stopper piece 14 is twisted by a substantial same angle as the turning angle of the handle 13a to produce a twisting reaction force.

Additionally, the turning arm 13 may accept such a reaction force as one to cause it to be returned back to its original position with the twisting reaction force of the torsion spring 12. However, the engagement portion 13b arranged at one side of the handle 13a of the turning arm 13 is engaged with the engagement pin 26 fitted and fixed to one side frame 1a while the arm is being flexed in a plate thickness direction, and the torsion spring 12 is held at a state in which it is twisted by a predetermined angle (from a state shown in Fig. 7 to a state shown in Fig. 2).

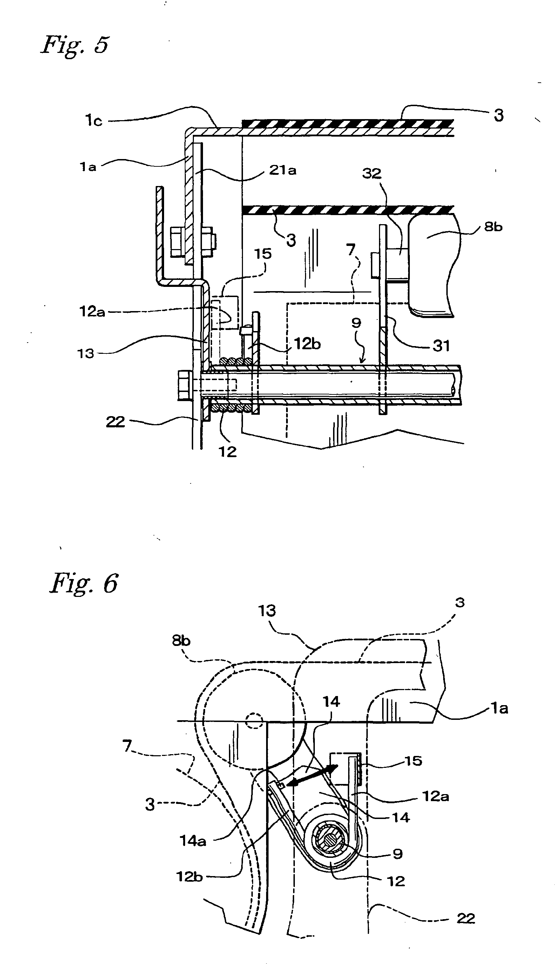

In turn, a pair of supporting members 31 are spaced apart by a predetermined value, fitted and fixed to the supporting shaft 9 receiving a twisting reaction force of the torsion spring 12 through the stopper piece 14 so as to be integrally assembled. Snap rollers 8a, 8b freely rotated are installed between the extremity ends of both supporting members 31, and both ends of the supporting shafts 32 provided in the snap rollers are supported at the extremity ends of the supporting members 31 to support the snap rollers 8a, 8b in such a way that they can be attached or removed. Each of the aforesaid snap rollers 8a, 8b is supported under a state in which it is in parallel with the driving roller 7 (Figs. 3, 5).

Thus, both snap rollers 8a, 8b are turned toward the outer circumference of the driving roller 7 through the supporting shaft 9 and the supporting members 31 under application of a twisting reaction of the torsion springs 12 under a state in which the turning arm 13 is rotated and engaged with the engagement pin 26. Then, both snap rollers are press contacted with the returning path wound around the outer circumference of the driving roller 7 from outside so as to apply a proper tension to the belt 3. With such an arrangement as above, a requisite frictional force is given between the belt 3 and the driving roller 7 at the time of driving operation so as to keep a transmission of the driving power.

For example, in the case that it is required to wash or clean the belt 3 after completion of use of the belt conveyor:

The handle 13a of the turning arm 13 is held with a hand to release the engaged state with the engagement pin 26 and then the handle 13a is turned in a downward direction. Along with this motion, the twisting reaction force provided by the torsion spring 12 is weakened. Concurrently, when the belt 3 in the returning path wound around the outer circumference of the driving roller 7 is loosened and the turning arm 13 is turned up to the lowest position, the loosened belt 3 can be pulled out in a horizontal direction through the clearances e, d'.

In addition, the conveyor A of the present preferred embodiment has employed a leg structure in which the rollers are abutted to each other to enable the loosened belt 3 to be pulled out in a horizontal direction from between the rollers as the leg 19 at a loading side and the leg 19 at an unloading side of the conveyor main body (a) in order to pull out the loosened belt 3 easily from the conveyor main body (a). This leg structure is similar to that disclosed in Japanese Patent Disclosure No. 2000-255737. As described above, it is also possible that the legs supporting the conveyor main body are of a cantilever type to enable the belt to be freely pulled out. The cantilever type leg is particularly suitable for a small-sized and lightweight conveyor.

In the case of the belt conveyor A of the present preferred embodiment described above, the torsion spring generating a twisting reaction force has been installed only at one end of the supporting shaft. However, the number of torsion springs in the conveyor of the present invention is not limited to one, but the torsion springs may be arranged at both ends of the supporting shaft 9.

In regard to this fact, the aforesaid belt conveyor A has employed a structure in which the snap roller 8a is resiliently pressed against the outer circumferential surface of the driving roller 7 with the torsion springs 12. However, as means pressing the snap rollers against the outer circumference of the driving roller, it is also possible to utilize a resilient member other than a torsion spring, and some existing resilient members such as either a coil spring or a leaf spring, for example, may provide the same function as that of the torsion spring.

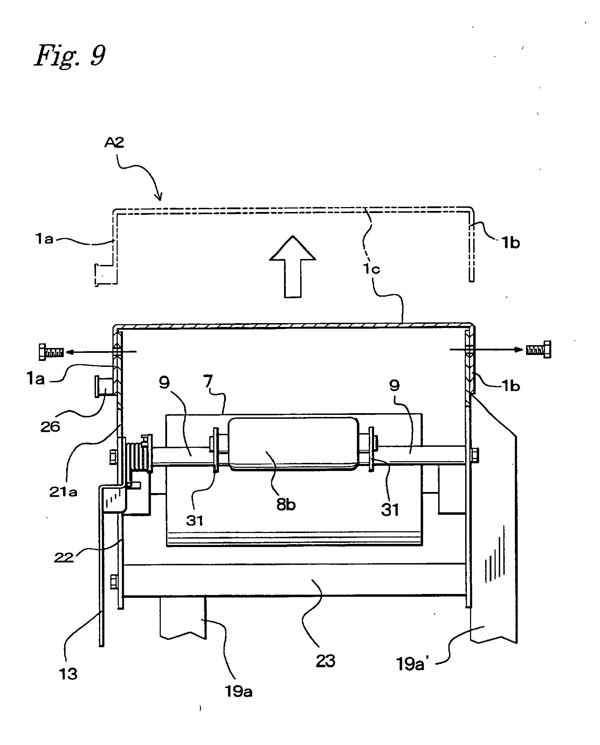

A belt conveyor A2 shown in Fig. 9 is constructed in the same manner as that of the aforesaid belt conveyor A, and frames 1a, 1b, 1c bent into a substantial U-shaped section to constitute a transferring plane are installed and they are fixed with bolts 40. The frames 1a, 1b and 1c integrally formed to each other can be removed from the machine body by loosening the bolts 40 and removing them. That is, the aforesaid frame can be washed under a state in which it is removed from the machine body together with the belt.

Additionally, since the frames 1a, 1b and 1c of the conveyor can be removed, it is possible to perform an easy transportation work or moving work because the conveyor itself can be transported under a state in which the frames are removed from a heavy conveyor during the transportation work of the conveyor itself or movement at an installing location and the like.

Further, the aforesaid belt conveyors A, A2 have an automatic tension applying function for always keeping a belt tension, so that they can be adapted for extension or retraction of the belt. Additionally, even if the belt is bulged out or retracted through its washing as well as its various kinds of use, the automatic tension applying mechanism can be adapted for it to enable a proper tension to be given to the belt.

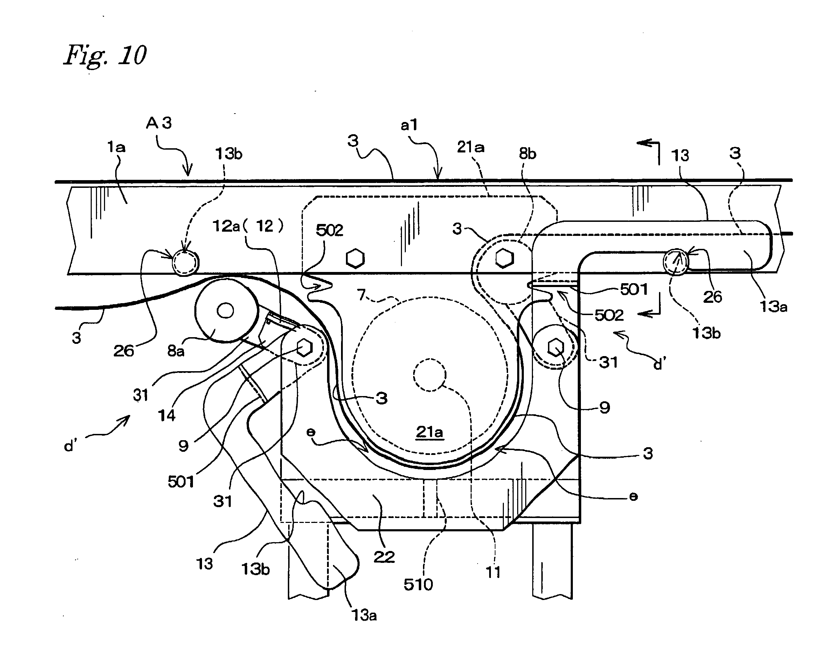

Next, a belt conveyor A3 shown in Fig. 10 will be described as follows.

Although the belt conveyor A3 is constituted basically in the same manner as those of the aforesaid belt conveyors A, A2, this belt conveyor A3 is comprised of a rigid cantilever 510 for supporting the outer frame 22 and a supporting structure for supporting both ends for removably supporting the extremity end of the cantilever 510, and the base end and the extremity end of the cantilever 510 are supported under a both-end supporting state to prevent a flexible deformation of the cantilever 510 from being generated.

In this case, the aforesaid belt conveyors A, A2 are constructed such that the outer frame 22 is supported by one cantilever 23 (Fig. 3). A hollow or solid lever member constitutes the aforesaid cantilever 23 and the base end of the cantilever 510 is welded to the supporting plate 21b and fixed, thereby it is supported in a horizontal orientation under a cantilevered state.

The lower central part of the outer frame 22 is fitted to and fixed at the extremity end of the aforesaid cantilever 23, and supported by the cantilever 23. Both supporting shafts 9, supporting members 31 and both snap rollers 8a, 8b are fixed to and supported at the outer frame 22 as described above. Accordingly, each of the aforesaid members is supported in a cantilever state by one cantilever 23.

The cantilever structure described above is an essential structure for constituting the clearance (e) due to necessity in which the belt 3 is frequently removed and washed or cleaned. However, there occurs sometimes that when the belt is supported in a cantilever manner with one cantilever 23, a relative large load is applied to the base end of the cantilever 23 causes the cantilever 23 itself to be slightly flexed in an upward or downward direction as found in the aforesaid preferred embodiment. Although such a flexing does not produce any functional problem, it may also be considered that when a large load is applied to the belt or its severe usage is continued for a long period of time, in particular, a certain influence is applied to a degree of parallel state of both snap rollers 8a, 8b due to flexing generated at the cantilever 23 and a reduction in a pressing force against the driving roller 7 or a zigzag motion of the belt is produced.

The belt conveyor A3 is devised for reducing a flexible deformation at the supporting structure described above as much as possible and its feature consists in the fact that the aforesaid cantilever 510 is held at both supporting ends under a state in which the turning arm 13 is rotated and engaged with the engagement pin 26.

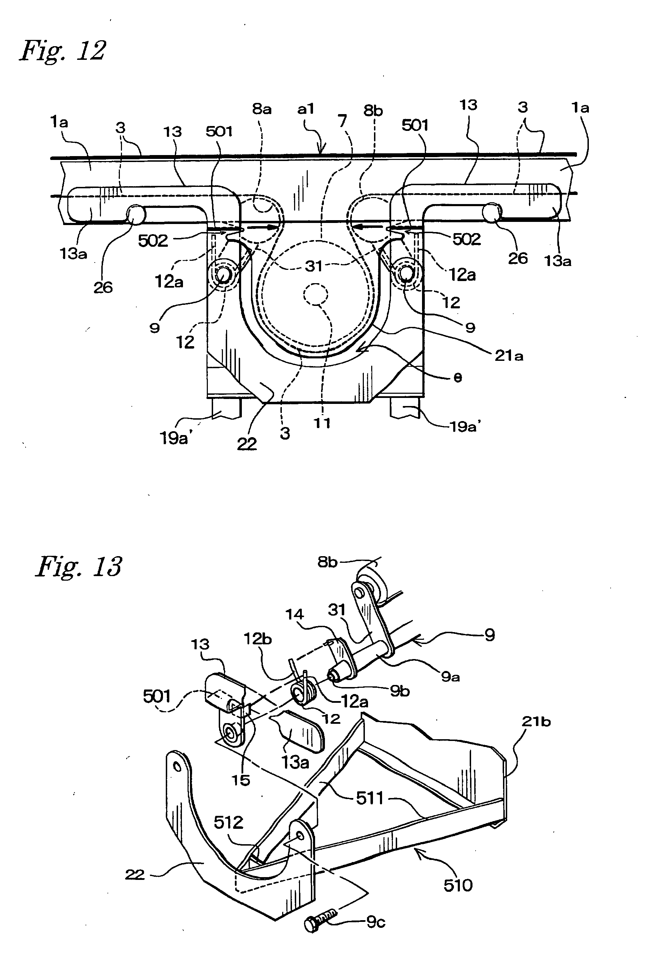

The cantilever 510 shown in Fig. 13 is made such that two thick wall band plates 511 are arranged like both slant sides of an isosceles triangle, its point locations are welded and connected in a substantial V-shape as seen in its top plan view. Since a load is added to the point locations in particular, a reinforcing piece 512 is welded inside the triangle to make a rigid fixing force at the point locations.

In addition, each of the base ends of both band plates 511 at the supporting plate 21b is welded to the supporting plate 21b so as to hold the cantilever 510 connected in a substantial V-shape as seen in a top plan view in a horizontal state in a cantilever manner. The lower central part of the outer frame 22 is welded to the aforesaid point locations and fixed and supported in the same manner as that of the aforesaid belt conveyors A, A2.

Since a both-end cantilever 510 constructed as described above is made such that the extremity ends of relative thick band-like steel plates are welded to have an I-shape in its sectional shape, strength and rigidity in an upward or downward direction are high. Further, it is constituted into a substantial isosceles triangle as seen in a top plan view, so that this unit can accommodate sufficiently for a load vibrating the extremity end in a horizontal direction.

A driving mechanism around the driving roller 7 for the belt conveyor A3 is constituted in the same manner as that of the aforesaid belt conveyors A, A2. However, the belt conveyor A3 of the present preferred embodiment is constructed such that both upper sides of the supporting plate 21a are provided with holding notches 502 and at the same time an intermediate part of each of both turning arms 13 is provided with an engagement piece 501 inserted into each of the aforesaid holding notches.

The holding notches 502 arranged at the aforesaid supporting plate 21a are recessed and formed at the right and left edges at the upper part of the supporting plate 21a (Fig. 10). In addition, the aforesaid holding notches 502 are set at a level just below the lower edge of the frame 1a and further recessed and formed to be opened toward outside. The holding notches 502 in the present preferred embodiment are recessed and formed to be expanded in a substantial V-shape in an outward direction, the engagement piece 501 arranged at the turning arm 13 enters at a wide opened inlet, resulting in that the engagement piece abuts against the deepest part while being guided.

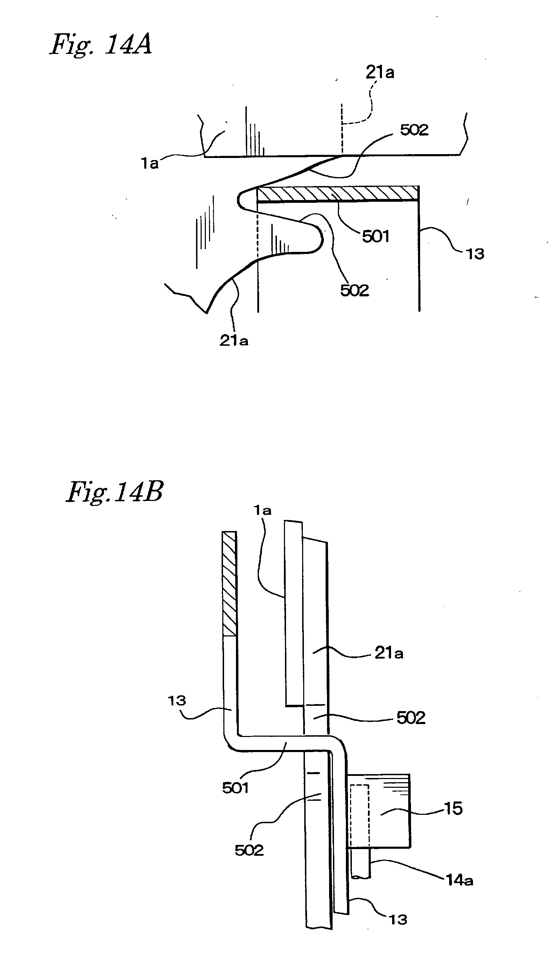

In turn, the engagement piece 501 arranged at the turning arm 13 is bent and formed into a crank shape in section at a part just in front of the bent part in the same manner as that of the turning arm 13 shown in Fig. 3 and the intermediate planer portion of the bent part is made as the plate-like engagement piece 501 (Fig. 14). The aforesaid engagement piece 501 is constructed such that the turning arm 13 is pulled up and turned, the engagement piece 501 arranged at the intermediate part of the turning arm 13 is inserted at the opening of the holding notch 502 into the deepest part, and its extremity abuts against the deepest part of the holding notch 502 (Fig. 10).

The extremity end of the engagement piece 501 at the turning arm 13 under this state abuts against the deepest part of the holding notch 502 to restrict a motion of the engagement piece 501 in an upward or downward and a forward or rearward directions so as to hold it from upper and lower sides (Fig. 14-a). Under this engaged state, the aforesaid engagement piece 501 may abut against the edge of the deepest part of the holding notch 502 from upper and lower sides and held there or the extremity end of the engagement piece 501 may abut against the deepest part of the holding notch 502 through a proper clearance.

When both turning arms 13 are kept at the engaged state as described above, the extremity end at the supporting plate 21b as well as its base end is supported and becomes a so-called both-end supporting state from a state where both snap rollers 8a, 8b, supporting members 31, supporting shaft 9 and outer frame 22 are supported by the cantilever 510 under an engaged relation between the engagement piece 501 and the holding notch 502 (Fig. 12).

As described above, the cantilever 510 is changed from the state where both snap rollers 8a, 8b, supporting members 31, supporting shaft 9 and outer frame 22 and the like acting as accessory members are supported in a cantilever form to a both-end supporting state by a method in which the extremity end is supported under the aforesaid engagement relation. Along with this situation, the cantilever 510 produces a certain surplus in its strength while the load is dispersed and then, a flexing deformation caused by the load can be effectively reduced.

That is, since strength and rigidity of the cantilever 510 are increased, the snap rollers 8a, 8b can always be supported with a surplus state, the outer circumference of the driving roller 7 and the belt 3 wound around the driving roller can be positively contacted with each other, the belt driving through the driving roller can always be kept constant and a stable operation can be attained.

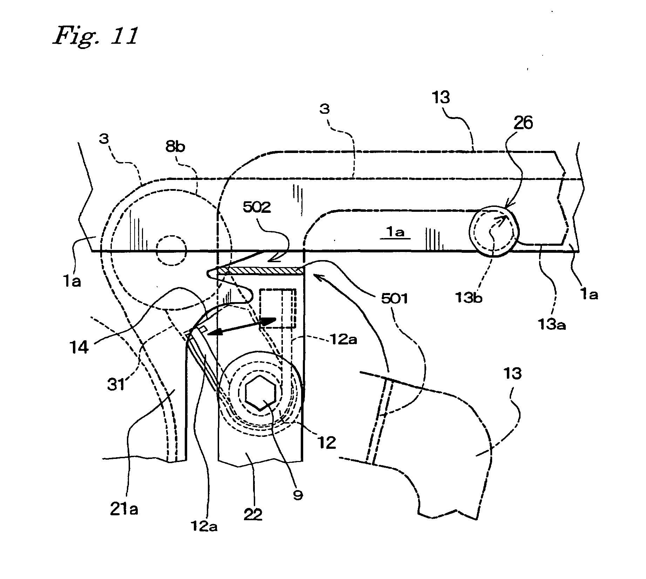

Further, in the case of the belt conveyor A3 shown in Figs. 10 to 13, although the cantilever 510 having a band steel plate formed into a substantial V-shape as seen in a top plan view has been used as a cantilever, as this cantilever member, the cantilever 23 used in the aforesaid belt conveyors A, A2 may be used.

In addition, although the engagement piece 501 acting as the first engagement part in the belt conveyors A, A2 in the aforesaid preferred embodiment is placed at the turning arm 13 and further the holding notch 502 acting as the second engagement part is constructed as the supporting plate 21a, this engagement relation can be reversed. That is, the holding notch is arranged on the turning arm, while the engagement piece is arranged at the supporting plate of the turning side and even under such a modification as stated above, it may act in the same manner as that of the aforesaid engagement structure. Further, the engagement structure between the first engagement part and the second engagement part can be fixed or removed as the turning arm 13 is turned and if it has a requisite holding force, any type of existing engagement structure can be used.

The engagement between the engagement piece 501 of the turning arm 13 and the holding notch 502 of the supporting plate 21a in the aforesaid preferred embodiment may act as a position setting of the turning arm 13 in upward or downward and forward or rearward directions in such a way that a positional relation between the driving roller 7 and the snap rollers 8a, 8b may not be changed. However, since the engagement between the engagement piece 501 of the aforesaid turning arm 13 and the holding notch 502 in the supporting plate 21a cannot define a position in a rightward or leftward direction, the turning arm 13 is provided with a protrusion (not shown) for setting a position in a rightward or leftward direction, and when the engagement piece 501 of the turning arm 13 is engaged with the holding notch 502 of the supporting plate 21a, abutment of the aforesaid protrusion against the outer circumferential surface of the supporting plate 21a is more effective in operation. With such an arrangement as above, even in the case that the turning arm 13 is operated to fix or remove the belt 3, the positional relation between the driving roller 7 and the snap rollers 8a, 8b is not changed and accordingly an initial adjustment state can be kept.

As described above, the belt conveyor of the present invention is constituted such that both supporting shafts and the snap rollers are arranged against the outer circumferential surface of the driving roller having a belt wound around and both snap rollers can be moved to or away from the outer circumferential surface of the driving roller as the supporting shaft is rotated. Then, the present invention is constructed such that the belt is twisted by turning the torsion spring fitted to the end part of the supporting shaft, the twisting reaction force is utilized to cause the aforesaid both snap rollers to be pressed against the outer circumferential part of the driving roller and to apply a suitable tension force to the belt, its structure can be substantially simplified as compared with that of the prior art belt conveyor where a tension force of the belt is kept under utilization of the snap rollers.

In addition, an operation of the snap rollers can be easily carried out without using any special tool and the like because the turning arm is turned to cause the snap rollers to be pressed against or retracted from the driving roller.

A clearance for use in pulling out the loosened belt toward outside is preferably arranged around a member for bearing one end of the main shaft for the driving roller, and one member for supporting the aforesaid driving roller and the other member for supporting the aforesaid turning arm are constituted to be spaced apart through this clearance.

Additionally, the base end of the cantilever is fixed to and supported at the frame side member of the conveyor main body under a cantilever state, and the other member for supporting the aforesaid supporting shaft is fitted to and supported at the extremity end of the cantilever. The first engagement part rotated in integral assembled state with the turning arm is arranged at the intermediate part of the aforesaid turning arm. Then, when the aforesaid turning arm is turned up to the engagement side end part, the aforesaid first engagement part is engaged with the second engagement part installed at the member at the conveyor main body. That is, the aforesaid cantilever is supported in both-end supported state through engagement between the second engagement part and the first engagement part.

As described above, supporting of the cantilever under its both-end supporting state enables a flexing deformation generated at the extremity end side of the cantilever to be effectively prevented. As a result, even in the case that the operation is carried out while accepting a large load, both snap rollers can be accurately abutted against the driving roller and further disadvantages such as a reduction in belt pressing force caused by a displacement of the snap rollers for a long period of time, a reduction in transmission of the driving force and occurrence of vibration or the like can be prevented in advance. In addition, it is also possible to prevent zigzag motion of the conveyor belt in advance.

The belt conveyor described in accordance with Claim 3 is constructed such that a clearance for use in pulling out the belt in an outward direction when the belt wound around the driving belt is loosened is provided around a member for bearing one end of the major shaft of the aforesaid driving roller. Accordingly, the belt can be easily pulled out of the aforesaid clearance by loosening the belt upon turning of both turning arms when the belt is removed from the machine and washed, for example, and in turn a work for installing the belt can also be easily carried out. Thus, in the case that it becomes necessary to remove the belt during the washing work for washing the belt, the belt fixing or removing work can be easily carried out within a short period of time.

The belt conveyor in accordance with Claim 4 is constructed such that the aforesaid turning arms are formed by a plate-like member, its outer shape is formed into a shape bent into a substantial L-shape, and the turning arms are flexed toward a plate thickness direction to enable the location of the extremity end to be fixed to or removed from the engagement part arranged at the conveyor side. Thus, it is possible to perform an easy operation when the snap rollers for the belt conveyor of the present invention are operated, assemble the structure for engaging the turning arms under the turned state or releasing the turning arms from the engaged state into a quite simple structure and contribute to a reduction in manufacturing cost.

The belt conveyor in accordance with Claim 5 is constructed the going path side of the belt is entirely supported from below and the frame at the going path side constituting a planer transferring passage can be fitted to or removed from the machine body. Thus, when the belt conveyor is to be washed, the frame can be removed together with the belt to wash away sludge or dust neatly without leaving it at all, so that it is possible to keep the belt conveyor clean or in sanitary state and also to reduce a troublesome washing operation.

The belt conveyor in accordance with Claim 6 is constructed such that there is provided an engagement piece as a first engagement part which is arranged at the intermediate part of the turning arms and integrally formed with the turning arms.

In addition, as the second engagement part, the aforesaid engagement piece is inserted into one member at the frame side for supporting the driving roller when the turning arms are turned up to the end part of the engagement side and the abutted holding notches are recessed and formed in such a way that motions of the engagement piece in an upward or downward and a forward or rearward directions are restricted.

That is, under a state in which the turning arm is turned up to the end part of the engagement side and engaged with it, the engagement piece arranged at the turning arm is inserted into the holding notch acting as the second engagement part formed at one member while being turned, and the engagement piece is held in the holding notch from upper and lower portions to restrict its motion in an upward or downward and a forward or rearward directions.

The aforesaid engagement states of both the first and second engagement portions are of a structure in which the engagement piece inserted into the holding notch is held from above and below to restrict a flexing deformation of the cantilever in an upward or downward and a forward or downward directions, so that its configuration is simple and the flexing deformation in an upward or downward and a forward or rearward directions generated at the cantilever due to the positive engagement can be effectively prevented.

The belt conveyor in accordance with Claim 7 is constructed such that the engagement piece in the belt conveyor according to Claim 6 is formed into a substantial plate-like shape and the holding notch is recessed in a substantial V-shape. Thus, as the turning arm is turned, the engagement piece is inserted into the holding groove, resulting in that the extremity end of the engagement piece formed into a plate-like shape is guided by the holding notch narrowed in a V-shape, it is inserted into the deepest part of the notch and abutted to it. Then, the edge part of the holding notch narrowed in a V-shape abuts against the upper and lower portions of the extremity end of the engagement piece to enable the motions of the engagement piece in an upward or downward and a forward or rearward directions to be positively prevented. That is, the engagement piece is held from upper and lower directions to prevent a flexing deformation of the cantilever and cause the operation of the snap rollers to be stabilized.

### EXPLANATION OF NUMERALS

A, A2, A3: belt conveyor; a: conveyor main body; a1: transferring passage; c, d': clearance; 2a, 2b: roller; 3: belt; 7: driving roller; 8a, 8b: snap roller; 9: supporting shaft; 12: torsion spring; 13: turning arm; 13a: handle; 13b: engagement part; 14: stopper piece; 14a: stopper part; 15: abutment part (handle); 21a: supporting plate; 21b: supporting plate; 23: cantilever; 26: engagement pin (holding means); 31: supporting member; 501: engagement piece; 502: fitting notch; 510: cantilever

## Claims

1. A belt conveyor (A; A2; A3) in which
each of a starting end and a terminal end of a conveyor main body (a) of the belt conveyor has a roller (2a; 2b) laterally installed;
an endless belt (3) is arranged between said rollers (2a; 2b);
a driving roller is arranged laterally in a horizontal orientation between both right and left sides at an intermediate part of said conveyor main body (a) on the returning path of said belt (3);
a driving source is connected to said driving roller (7) to drive and rotate said driving roller (7);
said belt (3) is wound around an outer circumference of a lower side of said driving roller (7);
a supporting shaft (9) is laterally arranged at both sides of the outer circumference of said driving roller (7);
said supporting shaft (9) comprises an inner shaft (9b) and an outer shaft (9a) rotatable about said inner shaft (9b);
a supporting member (31) is fitted and fixed to an intermediate part of each of said outer shaft (9a);
a snap roller (8a, 8b) is supported by each supporting member (31) and held parallel with said supporting shafts(9);
**characterized in that**
a base end of a turning arm (13) is fitted and fixed to an end part of each inner shaft (9b);
a torsion spring (12) is fitted between the base end of each turning arm (13) and an end part of the outer shaft (9a), wherein one end of said torsion spring (12) is engaged with a member (14) of said outer shaft (9a) and the other end of said torsion spring (12) is engaged with a member (15) of said turning arm (13);
when said turning arms (13) are turned by a predetermined angle and removably engaged at a predetermined position, said torsion springs (12) are twisted and their twisting reaction force causes said snap rollers (8a, 8b) to be pressed towards the outer circumferential surface of said driving roller (7) and thereby said belt (3) to be press contacted with the outer circumferential surface of said driving roller (7).

2. The belt conveyor according to claim 1 **characterized in that**
a major shaft (11) for the driving roller (7) is arranged between a first supporting member (21a) and a second supporting member (2 1 b), said first and second supporting members (21a; 21b) bearing each one end of said major shaft (11);
a cantilever (23) is provided to support in a cantilever manner a frame side member (22) of the conveyor main body (a), said second supporting member (21 b) being fitted to and supported at an extremity end of said cantilever (23);
said supporting shafts (9) are installed between said frame side member (22) and said second supporting member (21b);
a first engagement part (13b) is integrally assembled with each turning arm (13) at an intermediate part thereof;
second engagement parts (26) are arranged on a side frame (1a) of the conveyor main body (a);
each turning arm (13) can be turned up to a position, wherein said first engagement part (13b) of said turning arm (13) is engaged with one second engagement part (26) to support said cantilever (23).

3. The belt conveyor according to claim 2 **characterized in that** a clearance (e) is provided between an outer edge of said first supporting member (21a) and an inner edge of said frame side member (22) for pulling out the belt (3) in an outward direction when the belt wound around the driving roller (7) is loosened.

4. The belt conveyor according to Claim 2 or 3 **characterized in** such that said turning arm(13) is formed by a plate-like member, in a substantial L-shape, and the turning arm is flexed toward a plate thickness direction to enable the first engagement part (13b) to be fixed to or removed from the second engagement part (26) arranged at the conveyor side.

5. The belt conveyor according to any one of Claims 1 to 4 **characterized in that** the going path of the belt is entirely supported from below and the frame (1a, 1b, 1c) at the going path constituting a planer transferring passage (a1) can be fitted to or removed from the conveyor (A; A2; A3).

6. The belt conveyor according to claim 2 **characterized in that**
an intermediate part of each turning arm (13) is provided with an engagement piece (501);
both upper sides of said first supporting member (21a) are provided with a holding notch (502);
said engagement piece (501) of a turning arm (13) is inserted in one holding notch (502), when the turning arm is in said turned up position, in such a way that motion of said engagement piece (501) is restricted in an upward or downward and a forward or rearward directions.

7. The belt conveyor according to Claim 6 **characterized in that** the engagement piece (501) is formed into a substantial plate-like shape and the holding notches (502) are recessed in a substantial V-shape.

## Patentansprüche

1. Ein Bandförderer (A, A3, A3) bei dem an jedem Anfang und jedem Ende eines Fördererhauptkörpers (a) des Bandförderer eine Walze (2a, 2b) quer installiert ist;
ein endloses Band (3) zwischen den besagten Walzen (2a, 2b) angeordnet ist,
eine Antriebstrommel quer in einer horizontalen Ausrichtung zwischen den rechten und linken Seiten an einem Zwischenteil des besagten Fördererhaupt-körpers (a) am Rücklauf des besagten Bandes (3) angeordnet ist;
eine Antriebsquelle mit der besagten Antriebstrommel (7) verbunden ist, um besagte die Antriebstrommel (7) anzutreiben und zu drehen,
besagtes Band (3) um einen äußeren Umfang einer unteren Seite der besagten Antriebstrommel (7) gewunden ist,
eine Stützwelle (9) quer an beiden Seiten des äußeren Umfangs der besagten Antriebstrommel (7) angeordnet ist,
besagte Stützwelle (9) eine innere Welle (9b) und eine äußere Welle (9a) aufweist, die um die besagte innere Welle (9b) drehbar ist,
ein Stützglied (31) an ein Zwischenteil der besagten äußeren Welle (9a) angebracht und befestigt ist,
eine Spannrolle (8a, 8b) von jedem Stützglied (31) gestützt wird und parallel zu den besagten Stützwellen (9) gehalten wird;
**dadurch gekennzeichnet, dass**
ein unteres Ende eines Dreharmes (13) an ein Ende einer inneren Welle (9b) angebracht und befestigt worden ist,
eine Torsionsfeder (12) zwischen dem unteren Ende jedes Dreharmes (13) und am Endteil der äußeren Welle (9a) installiert ist, wobei eine Ende der besagten Torsionsfeder (12) in ein Glied (14) der besagten äußeren Welle (9a) eingreift und das andere Ende der besagten Torsionsfeder (12) in ein Glied (15) des besagten Dreharmes eingreift,
wenn besagte Dreharme (13) um einen vorbestimmten Winkel gedreht werden und entfernbar an einer vorbestimmten Position eingreifen, besagte Torsions-federn (12) verdreht werden und deren Verdrehreaktion verursacht, dass die besagten Spannrollen (8a, 8b) gegen die äußere Umfangsfläche der besagten Antriebsrolle (7) gedrückt werden und **dadurch** das besagte Band (3) in Berührung mit der äußeren Umfangsfläche der Antriebsrolle (7) gedrückt wird.

2. Der Bandförderer nach Anspruch 1, **dadurch gekennzeichnet, dass** eine Hauptwelle (11) für die Antriebsrolle (7) zwischen einem ersten Stützglied (21 a) und einem zweiten Stützglied (21b) angeordnet ist, besagte erste und zweite Stützglieder (21a, 21b) je ein Ende der besagten Hauptwelle (11) tragen,
ein Ausleger (23) bereitgestellt ist, um ein Rahmenseitenglied (22) des Fördererhauptkörpers (a) in einer frei schwebenden Art zu stützen, besagtes zweites Stützglied (21b) an einem äußersten Ende des besagten Auslegers (23) befestigt und gestützt wird,
besagte Stützwellen (9) zwischen den besagten Rahmengliedern (22) und besagtem zweiten Stützglied (21b) installiert sind,
ein erstes Eingriffsteil (13b) einstückig mit jedem Dreharm (13) an einem Zwischenteil desselben montiert ist,
zweite Eingriffsteile (26) an einem Seitenrahmen (1a) des Fördererhaupt-körpers (a) angeordnet sind,
jeder Dreharm (13) aufwärts in eine Stellung gedreht werden kann, wobei das besagte Eingriffsteil (13b) des besagten Dreharms (13) in ein zweites Eingriffsteil (26) eingreift, um den besagten Ausleger (23) zu stützen.

3. Der Bandförderer nach Anspruch 2, **dadurch gekennzeichnet, dass** ein Abstand (e) zwischen einer äußeren Kante des besagten ersten Stützglieds (21a) und einer inneren Kante des besagten Rahmenseiten-glieds (22) bereitgestellt wird, um das Band (3) in eine Auswärtsrichtung zu ziehen, wenn das Band, das um die Antriebsrolle (7) gewunden ist, gelockert wird.

4. Der Bandförderer nach Ansprüchen 2 oder 3, **dadurch** gekenn-zeichnet, dass der besagte Dreharm (13) größtenteils L-förmig von einem plattenförmigen Glied gebildet wird und der Dreharm in eine Plattenstärke-richtung bewegt wird, so dass das erste Eingriffsteil (13b) vom zweiten an der Bandseite angeordneten Eingriffsteil (26) befestigt oder entfernt werden kann.

5. Der Bandförderer nach einem der Ansprüche 1 bis 4, **dadurch gekennzeichnet, dass** der Lauf des Bandes völlig von unten gestützt wird und der Rahmen (1a, 1b, 1c) am Bandlauf, der einen flachen Transportbe-reich (a1) darstellt, am Bandförderer (A, A2, A3) befestigt oder entfernt werden kann.

6. Der Bandförderer nach Anspruch 2, **dadurch gekennzeichnet, dass** ein Zwischenteil jedes Dreharms (13) mit einem Eingriffsteil (501) versehen ist,
beide oberen Seiten des besagten ersten Stützglieds (21a) mit einer Haltekerbe (502) versehen sind,
besagtes Eingriffsteil (501) eines Dreharms (13) in eine Haltekerbe (502) eingeführt wird, wenn der Dreharm in besagter Aufwärtsstellung in solch einer Weise gedreht ist, dass die Bewegung des besagten Eingriffsteils (501) in einer Auf- oder Abwärtsrichtung und einer Vor- oder Rückwärts-richtung beschränkt ist.

7. Der Bandförderer nach Anspruch 6 **dadurch gekennzeichnet, dass** das Eingriffsteil (501) zu einer größtenteils plattenartigen Form gebildet wird und die Haltekerben (502) in einer größtenteils V-förmigen Form ausgekehlt sind.

## Revendications

1. Transporteur à courroie (A ; A2 ; A3),
chaque extrémité de départ et chaque extrémité terminale d'un corps principal (a) de transporteur du transporteur à courroie étant équipée d'un rouleau (2a ; 2b) lequel est monté dans le plan latéral;
une courroie sans fin (3) étant disposée entre lesdits rouleaux (2a ; 2b) ;
un rouleau menant étant disposé dans le plan latéral suivant une orientation horizontale entre le côté droit et le côté gauche, au niveau d'une partie intermédiaire dudit corps principal (a) de transporteur sur le parcours de retour de ladite courroie (3) ;
une source d'entraînement étant raccordée audit rouleau menant (7) afin d'assurer l'entraînement et la rotation dudit rouleau menant (7) ;
ladite courroie (3) étant enroulée autour d'une circonférence extérieure d'un côté inférieur dudit rouleau menant (7) ;
un axe de support (9) étant disposé dans le plan latéral sur les deux côtés de la circonférence extérieure dudit rouleau menant (7) ;
ledit axe de support (9) comprenant un axe interne (9b) et un axe externe (9a) lequel est apte à tourner autour dudit axe interne (9b) ;
un élément de support (31) étant monté et fixé sur une partie intermédiaire de chacun desdits axes externes (9a) ;
un rouleau à enclenchement rapide (8a, 8b) étant soutenu par chaque élément de support (31) et maintenu en parallèle avec lesdits axes de support (9);
**caractérisé en ce que**
une extrémité de base d'un bras rotatif (13) est montée et fixée sur une partie d'extrémité de chaque axe interne (9b) ;
un ressort de torsion (12) est monté entre l'extrémité de base de chaque bras rotatif (13) et une partie d'extrémité de l'axe externe (9a), cas dans lequel une extrémité dudit ressort de torsion (12) est engagée avec un élément (14) dudit axe externe (9a) alors que l'autre extrémité dudit ressort de torsion (12) est engagée avec un élément (15) dudit bras rotatif (13) ;
lorsque lesdits bras rotatifs (13) sont tournés suivant un angle prédéterminé et sont engagés de façon amovible à une position prédéterminée, lesdits ressorts de torsion (12) subissent une torsion et leur force de réaction de torsion provoque une pression sur lesdits rouleaux à enclenchement rapide (8a, 8b) pour que ceux-ci se déplacent vers la surface circonférentielle externe dudit rouleau menant (7), et par conséquent ladite courroie (3) sera mise en contact par pression avec la surface circonférentielle externe dudit rouleau menant (7).

2. Transporteur à courroie, selon la revendication 1, **caractérisé en ce que**
un axe principal (11) pour le rouleau menant (7) est disposé entre un premier élément de support (21a) et un deuxième élément de support (21b), lesdits premier et deuxième éléments de support (21a; 21b) servant d'appui à chacune des extrémités dudit axe principal (11) ;
un montage en porte-à-faux (23) est prévu pour soutenir, suivant une manière cantilever, un élément latéral de bâti (22) du corps principal (a) de transporteur, ledit deuxième élément de support (21b) étant monté et soutenu au niveau d'un bout d'extrémité dudit montage en porte-à-faux (23) ;
lesdits axes de support (9) sont installés entre ledit élément latéral de bâti (22) et ledit deuxième élément de support (21b) ;
une première partie d'engagement (13b) est assemblée de façon intégrante avec chaque bras rotatif (13) au niveau d'une partie intermédiaire de celui-ci ;
les deuxièmes parties d'engagement (26) sont disposées sur un bâti latéral (1a) du corps principal (a) de transporteur ;
chaque bras rotatif (13) peut être tourné jusqu'à une certaine position, cas dans lequel ladite première partie d'engagement (13b) dudit bras rotatif (13) est engagée avec une deuxième partie d'engagement (26) afin de soutenir ledit montage en porte-à-faux (23).

3. Transporteur à courroie, selon la revendication 2, **caractérisé en ce qu'**un dégagement (e) est prévu entre un bord externe dudit premier élément de support (21 a) et un bord interne dudit élément latéral de bâti (22) afin de tirer la courroie (3) suivant un sens dirigé vers l'extérieur lorsqu'on desserre la courroie enroulée autour du rouleau menant (7).

4. Transporteur à courroie, selon la revendication 2 ou 3, **caractérisé en ce que** ledit bras rotatif (13) est formé par un élément ressemblant à une plaque, suivant une forme sensiblement en L, et que le bras de rotation est fléchi vers le sens de l'épaisseur de la plaque pour qu'il soit possible de fixer la première partie d'engagement (13b) sur la deuxième partie d'engagement (26) agencée au niveau du côté du transporteur, et pour qu'il soit possible de l'en enlever.

5. Transporteur à courroie, selon l'une quelconque des revendications 1 à 4, **caractérisé en ce que** le parcours d'exploitation de la courroie est entièrement soutenu à partir du dessous, et le bâti (1a, 1b, 1c) au niveau du parcours d'exploitation, lequel constitue un passage de transfert plus régulier (a1), peut être monté sur le transporteur (A ; A2 ; A3) ou peut en être enlevé.

6. Transporteur à courroie, selon la revendication 2, **caractérisé en ce que**
une partie intermédiaire de chaque bras rotatif (13) est dotée d'une pièce d'engagement (501) ;
les deux côtés supérieurs dudit premier élément de support (21a) sont munis d'une entaille de retenue (502) ;
ladite pièce d'engagement (501) d'un bras rotatif (13) est introduite dans une entaille de retenue (502), lorsque le bras rotatif se trouve dans ladite position dirigée vers le haut, de sorte que le mouvement de ladite pièce d'engagement (501) est limité dans un sens vers le haut ou vers le bas, ainsi que dans un sens vers l'avant ou vers l'arrière.

7. Transporteur à courroie, selon la revendication 6, **caractérisé en ce que** la pièce d'engagement (501) est façonnée en une forme ressemblant sensiblement à une plaque et les entailles de retenue (502) sont ménagées en retrait suivant une forme sensiblement en V.
